# EUROPEAN PATENT SPECIFICATION

(11) **EP 2 255 616 B1**
(45) Date of publication and mention of the grant of the patent: **22.01.2014**
(21) Application number: 10174466.2
(22) Date of filing: 15.03.2005
(51) Int. Cl.: A01K 5/02, A01J 5/017

(54) **Behavioural milking**
Verhaltensmelken
Traite comportementale

(30) Priority: 24.03.2004 SE 0400774
(43) Date of publication of application: 01.12.2010
(62) Divisional of application: 05722214.3
(73) Proprietor: DeLaval Holding AB, 147 21 Tumba (SE)
(72) Inventor: Melin, Martin, 753 23 Uppsala (SE)
(74) Representative: Keijser Bergöö, Malin Katarina

(56) References cited:
- EP-A- 1 131 997
- EP-A1- 1 008 294
- EP-A2- 1 300 074

## Description

### TECHNICAL FIELD

The present invention relates to an automatic milking machine for automatically milking animals and a method therefore. More specifically the present invention relates to an automatic milking machine for automatically milking animals considering eating behaviours for individual animals and a method.

### BACKGROUND OF THE INVENTION

In modern barns employing automatic milking machines, where animals is automatically milked using a robot, the animals are left much at there own, as opposed to traditional milk farming where the milking animals usually were gathered two times a day for milking. In such modern barns, milking animals are allowed, at least to some extent, to decide when they should be milked, so called voluntary milking. Oftentimes, these systems also include some kind of means to guarantee that all animals are milked regularly, for instance moving gates, forcing animals, which has not been milked for some time to the automatic milking machine.

Commonly, the means to make the milking animals voluntarily go to the automatic milking machine is food. Concentrate is offered at the milking machine, and since this is preferred food for most animals, they tend to go to the milking machine to get concentrate food. However, it is equally important not to milk animals every time they appear at the milking machine, since this would result in non optimal use of the milking machine and the animals. Therefore, a milking allowance parameter is used, and whenever the milking allowance is set to true for a specific animal, that animal will be milked when it appear at the milking machine. This milk allowance parameter is usually the time since last milking, for instance if the time since last milking is more than 320 minutes, then the animal is allowed to be milked. Other milking allowance parameters are also used, such as expected milk yield, success of previous milking, number of other animals milked since last time etc., or a combination of these parameters.

A further complication is that the milking animals need to have access to food as well as concentrates also between milking occasions. Therefore, feeding stations are often located in the barn and the access to these feeding stations is controlled using gates. The milking machine then controls the gates so that a milking animal, having milking allowance, is not allowed access to the feeding stations. The milking animals, then learns that feed is available at the milking machine and will go to the milking machine when she is not allowed access to the feeding station through the gates.

This, however, disturbs the eating pattern of the animal, since the animal will first go to the gate, when she is hungry. There she will be denied access to food. She will then take some time before going to the milking machine, where she possibly ends up in a waiting line. This extra time builds hunger, so when she finally ends up in the feeding station, she will spend more time there, eating more. This will tend to mean that she will eat larger meals not so often, which in turn means a less than optimal eating behaviour. It would be better if the automatic milking disturbed the eating behaviour of the animal to the least possible extent, as seen from the well-being of the animal, as well as from a milk economic perspective.

The eating behaviour for cows consists of a number of meals per 24 hour, where each meal is separated in time. Each meal consists of a number of eatings, which is also separated in time. The mean value between each eating could for instance be 2-3 minutes and the mean value between each meal could be for instance 3-4 hours. A new meal is defined to start when the time from the last eating was greater than a meal criteria time. The meal criteria could for instance be around 40-70 minutes.

It would thus be beneficial if a way of automatically milking animals, which disturbs their eating behaviour to the least possible extent, could be conceived.

It should be noted here that drinking behaviour essentially follows the same pattern as the eating behaviour, if the animal is given access to water in the same controlled manner as for food.

EP 1131997 A relates to a construction including at least one implement for automatically milking animals, comprising a computer, at least one milking robot for applying teat cups to the teats, which implement includes at least one computer for identifying an animal that has arrived at the implement. The computer is provided with a programme, with the aid of which the implement is suitable for recording the amount of milk produced by an animal during milking, calculating on the basis of this data the expected milk yield of the animal, and activating the milking robot on condition that the expected milk yield of said animal will exceed a base value.

### SUMMARY OF THE INVENTION

The present inventor has, through research found the surprising fact that feeding and drinking patterns are characteristic for individual cows and consistent over time. The major part (83-96%) of the random variation in the feeding patterns of the cows was due to individual differences between cows. Only a small part (4-17%) of the random variations in the feeding patterns was due to individual differences for a specific cow. That is, it is possible to define individual meal criteria for individual animals which did not change significantly during a lactation.

This surprising discovery thus makes it possible to find the specific meal criteria time for each milking animal in a herd of milking animals and use this as a milking allowance parameter to control when to milk animals, without disturbing their eating behaviour.

It is a main object of the present invention to provide such apparatus and method that at least alleviate the above problems.

It is in this respect a particular object of the invention to provide such apparatus and method that automatically milks animal with minimal disturbance to the animals eating and drinking behaviour.

These objects among others are, according to a first aspect of the present invention, attained by a method for automatically milking animals by means of a milking machine provided to automatically connect teat cups to the teats of a milking animal and automatically milking the animal, wherein the milking machine is controlled by a computer, and the computer is further provided to control if an animal is allowed to be milked. The method comprises the steps of using a meal criteria parameter for each animal to be served by the milking machine, measuring the time since the milking animal was last milked, allowing the milking animal to be milked if the measured time is larger than a milking allowance parameter, and setting the milking allowance parameter based on the meal criteria parameter.

These objects among others are, according to a second aspect of the present invention, attained by an automatic milking machine for automatically milking animals, comprising the features of claim 15.

By, using a meal criteria in the decision if an animal should be milked or not it is possible to take decisions regarding milking of animals that will disturb the eating behaviour of the animal to the least possible extent.

According to one alternative of the invention the recording of a parameter relating to the eating behaviour is performed by providing a reader in each meal or water station the milking animals has access to, and recording each occurrence of the milking animal in each meal or water station, and recording the parameter relating to the eating or drinking behaviour whenever the time between two occurrences is longer than the meal criteria parameter.

It should be noted that meal or water stations can be separate stations in the barn where food or water is provided, or it can be food and/or water troughs, where food and/or water is provided to the animal. Such troughs may be controlled by the automatic milking machine to dispense food or water depending on if the animal is to be milked, that she has a milking allowance.

By recording each time an animal visit a feeding station it is possible to deduce when she starts a new meal, or when she has finished a meal. By recording these events, and using them to decide when a milking animal should get a milking allowance, the milking occasion can be planned to disturb the eating pattern to the least possible extent.

According to one variant of the invention the milking animal is allowed at least one full meal between each milking.

By allowing a full meal between each milking the milking animal can be taught that she must go to the milking machine every second meal. Thus, she might not first go the gate and be denied feed, but rather go directly to the milking machine. If an animal has an individual milk criteria parameter of 3 hours she will, with this scheme, be milked four times every 24 hours, and always in direct relation to a meal. Thus, she will be milked when she, after a period of no eating, anyway is up and about. Each milk criteria parameter is set and used individually per cow.

According to one variant of the invention the number of full meals between each milking is increased when the milking animal is later in the lactation phase.

When an animal is long gone in lactation, she should be dried. It is then suitable to reduce the number of milking occasions per 24 hours to let the animal dry out and this is, according to this variant, performed, by increasing the number of meals between each milking.

According to one variant of the invention the animal is denied access to feed, if the animal has previously concluded a predetermined number of full meals without being milked, until the animal passes the automatic milking machine.

According to one variant of the invention the computer is provided to control access to the feeding or water stations by controlling gates giving access to the feeding or water stations, or controlling distribution of feed or water in the feeding or water stations.

By denying the animal access to feeding she will go to the milking machine. This is a way to lure the animal to the machine to thereby milk her.

According to one variant of the invention the meal criteria parameter is determined by: - providing a reader in each meal and/or water station and recording each occurrence of the milking animal in each meal and/or water station in order to establish feeding visit intervals, - fitting at least two density functions to the natural logarithm of the feeding visit intervals, and - defining the meal criteria to be larger than the mean value for the density function having the lowest mean value, and to be lower than the mean value of the density function having the highest mean value.

The meal criteria may be determined for each animal during an initial phase when the animal is introduced in the barn. During that period the animals may be given free access to food to determine their natural feeding behaviour.

By fitting two density functions to the feeding visit intervals, the density function having the lowest mean value will represent with-in meal eatings, and the density function with the highest mean value will represent between meal times. Thus, a meal criteria should be set somewhere between these mean values.

According to one variant of the invention the meal criteria is determined for each individual animal in a separate area and fed to said computer for use in said method.

According to one variant of the invention the meal criteria is defined to be the mean value for the density function having the highest mean value, reduced with the standard deviation for the density function having the highest mean value multiplied with a specified factor.

One way to specify a meal criteria parameter can be using the mean value reduced with the standard deviation for the density function having the highest mean.

According to one variant of the invention the meal criteria is defined to be the time for which the first density function and the second density function intersect.

Another way to define the meal criteria is at the intersection of the two density functions.

According to one variant of the invention the density functions are Gauss density functions or Weibull density functions. Alternatively, may one density function be a Gauss function and the other a Weibull function.

According to one variant of the invention said meal criteria parameter is set to the value used in the previous lactation for animals having their second or higher lactation period.

Thereby an initial meal criteria parameter, can be established.

According to one variant of the invention a new meal criteria parameter is determined for each animal regularly during a lactation, and if said new meal criteria parameter differs from said used meal criteria parameter with more than a determined threshold, the new meal criteria parameter is used.

Thereby, the meal criteria may be updated. This is valuable if for instance a rather harsh initial meal criteria was used, or if the meal criteria from the previous lactation was used. According to one variant of the invention the parameter relating to the eating behaviour is start of a new meal or end of a full meal, wherein end of a full meal is defined as the time of the last recording of feeding, when no more feeding takes place for a time period longer than the meal criteria parameter, and start of a new meal is defined as the time of the first feeding attempt after a time period with no feeding which is longer than the meal criteria parameter.

According to one variant of the invention the automatic milking machine comprises at least two milking robots.

It should be noted that the term automatic milking machine, or just milking machine, in this disclosure is used as a collective term incorporating means to provide the possibility to automatically milk animals according to the invention. Thus it may for instance, for some variants of the invention, include animal identification means, at each feeding station. It may as indicated above also include more than one milking robot, where two milking robots may be located apart from each other. They may then be served by a common computer, or by a network of computers.

Further characteristics of the invention and advantages thereof will be evident from the following detailed description of embodiments of the invention.

### BRIEF DESCRIPTION OF THE DRAWINGS

The present invention will become more fully understood from the detailed description of embodiments of the present invention given herein below and the accompanying Figs. 1 to 5, which are given by way of illustration only, and thus are not limitative of the present invention.
Figure 1 is a schematic top view of a barn according to the present invention.
Figures 2a and 2b are probability density distributions of eating intervals for two different milking animals.
Figure 3 is a schematic flow diagram of an embodiment according to the invention.
Figure 4 is a schematic flow diagram of an embodiment according to the invention.
Figure 5 is a schematic flow diagram of another embodiment according to the invention.

### PREFERRED EMBODIMENTS

In the following description, for purposes of explanation and not limitation, specific details are set forth, such as particular techniques and applications in order to provide a thorough understanding of the present invention. However, it will be apparent to one skilled in the art that the present invention may be practiced in other embodiments that depart from these specific details. In other instances, detailed descriptions of well-known methods and apparatuses are omitted so as not to obscure the description of the present invention with unnecessary details.

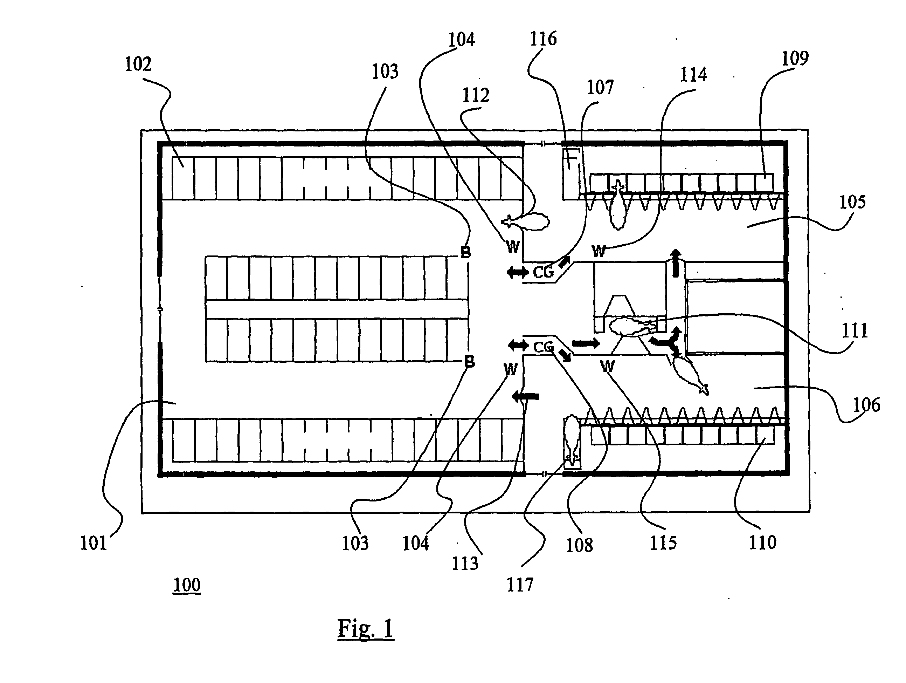

Figure 1 is a barn according to one embodiment of the invention. The barn 100 comprises a resting area 101 having resting bouts. Brushes 103 are provided for the well-being of the animals in the resting area 101. Water troughs 104 are also provided in the resting area 101. The barn 100 further comprises a first and second feeding area 105 and 106, which are accessible through first and second computer controlled gates denoted 107 and 108, respectively. In each feeding area is a number of feeding stations provided, whereof one in each feeding area is denoted 109 and 110, respectively. Further water troughs are also provided in the feeding area and are denoted 114 and 115 An automatic milking machine 111 is provided between the feeding areas and arranged so that, if an animal enters the milking machine from the resting area she might be milked before given access to the feeding areas. One way gates 112 and 113 allows the animals to pass from the feeding areas, 105 and 106 to the resting area 101. Feeding concentrates is available to the animals and are denoted 116 and 117.

The automatic milking machine 111 is provided with a computer (not shown) controlling, amongst other things, the application of teat cups, the teat cleaning and the milking of animal etc. The computer further controls the first and second gate 107 and 108, as well as food distribution at all feeding stations in the feeding area and water distribution at the water troughs 104, 114, 115. Each feeding station, as well as water trough, comprises an animal ID reader, which is connected to the computer so that a registration of each time a specific animal visits a feeding station or water trough is recorded in the computer. These readings are used to determine a meal criteria parameter for each animal.

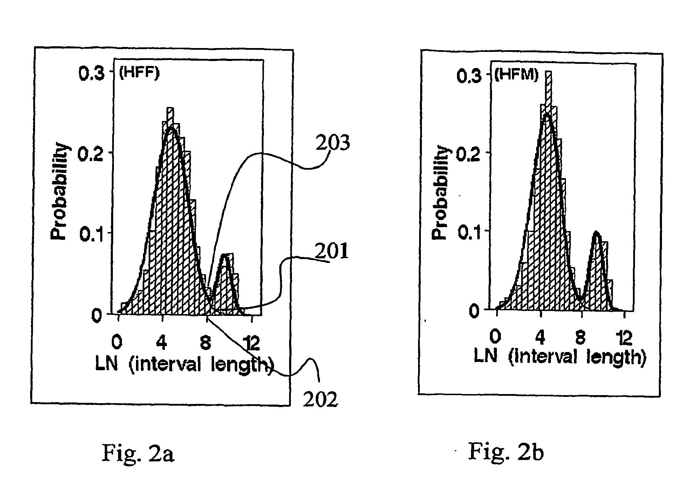

Figures 2a and 2b are plots of the logarithm of the feeding interval for two different animals, where the X-axis represent time between eatings, and the Y-axis represents the probability that the animal should start a new eating after that particular time. As is easily seen the plot is divided into two parts for both animals where the probability increases. Turning to figure 2a, a first Gaussian density function 201 is fitted to the first part and a second Gaussian density function 202 is fitted to the second part, as is seen in the figure. The meal criteria parameter is defined as the intersection 203 between the two density functions.

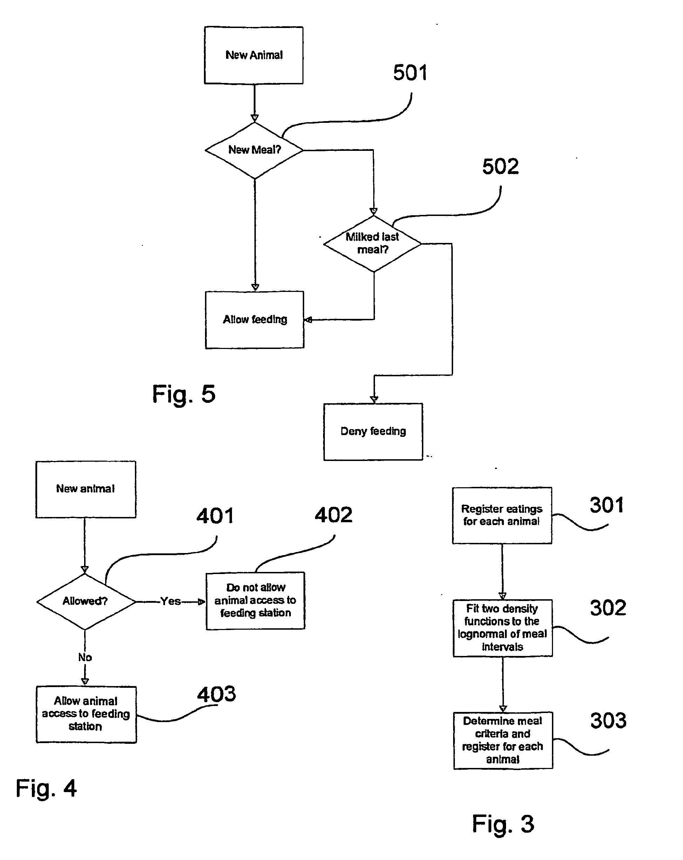

The operation of the automatic milking machine 111 in figure 1 will not be described in connection with figures 3 to 5.

Figure 3 is a schematic flow diagram of an embodiment according to the invention showing how the meal criterion is determined. In step 301 the computer in the automatic milking machine 111 register each visit to a feeding station for each animal, and in step 302 fits two density functions to the logarithm of the visiting intervals to determine the meal criteria according to the above in step 303. In step 303 the meal criteria for each animal is also recorded in the database for later use in deciding if an animal should be milked or not.

Figure 4 is a schematic flow diagram according to one version of the invention. At any time when an animal presents itself to any of the computer controlled gates 107 and 108, the computer controls, in step 401, if the animal has a milking allowance. If the animal has a milking allowance, the gate 107 or 108 remains closed, step 402, and the animal is lured to go to the automatic milking machine 111 and is milked before given access to the feeding area 105, 106. When the animal passes the milking machine 111 she is thus milked. If the animal has no milking allowance the gate 107 or 108 is opened and the animal is let directly into the feeding area.

The milking allowance is set to true if an animal individual time has passed and the animal is not in the middle of an ongoing meal. The animal individual time is set depending on the meal criteria for that particular animal, so that her meal habits are not interfered.

Figure 5 is a schematic flow diagram according to another variant of the invention, where the animals are milked every second meal. It is of course easy to adapt the algorithm if other criteria are to be used, such as that the animal should be milked every meal, ever third meal etc. When an animal present itself before any of the computer controlled gates 107 and 108, the computer in the automatic milking machine 111, checks, in step 501 if the animal is to start a new meal or if she is continuing an ongoing meal. This is done by comparing the time lapsed since her last visit to any feeding station, with her meal criteria parameter. The meal criteria parameter is of course also here set and used individually per cow. If the time lapsed is larger than the meal criteria parameter then this is a new meal. If this is a new meal, a check is performed, step 502, to control if this animal was milked in connection with the start of the previous meal. If this is so, the animal is allowed into the feeding area, but if the animal was not milked in connection with the last meal, she is denied access to the feeding area and is thus lured to visit the automatic milking machine to get milked.

It should be made clear that an animal may go directly to the milking machine. The same tests are performed in this case. That is, if she, in the first case, has a milking allowance, she is milked, or, in the second case, if she had had a meal without milking, she is milked.

It will be obvious that the invention may be varied in a plurality of ways. Such variations are not to be regarded as a departure from the scope of the invention. All such modifications as would be obvious to one skilled in the art are intended to be included within the scope of the appended claims.

## Claims

1. A method for automatically milking animals by means of a milking machine provided to automatically connect teat cups to the teats of a milking animal and automatically milking said animal, wherein the milking machine is controlled by a computer, and said computer is further provided to control if an animal is allowed to be milked, said method comprising:
- using a meal criteria parameter for each animal to be served by said milking machine, and
- measuring the time since the milking animal was last milked, and being **characterized by** the steps of:
- allowing said milking animal to be milked if said measured time is larger than a milking allowance parameter, and
- setting said milking allowance parameter based on said meal criteria parameter.

2. The method according to claim 1, comprising the step of:
- allowing said milking animal at least one full meal between each milking.

3. The method according to claim 1 or 2, comprising the step of:
- increasing the number of full meals between each milking when said milking animal is later in the lactation phase.

4. The method according to any of claims 1-3, comprising the further step of:
- denying said animal access to feed until said animal passes said automatic milking machine, if said animal has previously concluded a predetermined number of full meals without being milked.

5. The method according to any of claims 1-4, wherein
- said computer is provided to control access to said feeding or water stations by controlling gates giving access to said feeding or water stations, or controlling distribution of feed or water in said feeding or water stations.

6. The method according to any of claims 1-5, wherein
- said meal criteria parameter is determined for each individual animal in a separate area and fed to said computer for use in said method.

7. The method according to any of claims 1-6, wherein said meal criteria parameter is determined by the steps of:
- providing an animal ID reader in each meal and/or water station and recording each occurrence of said milking animal in each meal and/or water station in order to establish feeding visit intervals.

8. The method according to claim 7, wherein said meal criteria parameter is determined by the further steps of:
- fitting at least two density functions to the natural logarithm of the feeding visit intervals, and
- defining said meal criteria to be larger than the mean value for the density function having the lowest mean value, and to be lower than the mean value of the density function having the highest mean value.

9. The method according to claim 8, wherein
- said meal criteria parameter is defined to be the mean value for the density function having the highest mean value, reduced with the standard deviation for the density function having the highest mean value multiplied with a specified factor.

10. The method according to claim 8, wherein
- said meal criteria parameter is defined to be the time for which the first density function and the second density function intersect.

11. The method according to any of claims 8-10, wherein
- each of said density functions is a Gauss density function or a Weibull density function.

12. The method according to claim 1, wherein
- for animals having their second or higher lactation period, said meal criteria parameter is set to the value used in the previous lactation.

13. The method according to claim 1, wherein
- a new meal criteria parameter is determined for each animal regularly during a lactation, and
- if said new meal criteria parameter differs from said used meal criteria parameter with more than a determined threshold, the new meal criteria parameter is used.

14. The method according to claim 1, wherein
- said milking machine comprises a feeding station, and the method comprises the further step of:
- denying said milking animal feed, at all feeding stations except the feeding station in said milking machine, if said animal has previously concluded a predetermined number of full meals without being milked.

15. An automatic milking machine for automatically milking animals, the automatic milking machine being provided to automatically connect teat cups to the teats of a milking animal and automatically milking said animal, wherein the milking machine is provided with a computer for control thereof, and said computer is further provided to control if an animal is allowed to be milked, said automatic milking machine being provided for:
- using a meal criteria parameter for each animal to be served by said milking machine, and
- measuring the time since the milking animal was last milked, **characterised in that** said automatic milking machine is provided for:
- allowing said milking animal to be milked if said measured time is larger than a milking allowance parameter, and
- setting said milking allowance parameter based on said meal criteria parameter.

## Patentansprüche

1. Verfahren zum automatischen Melken von Tieren mittels einer Melkmaschine, die dafür vorgesehen ist, automatisch Zitzenbecher an den Zitzen eines Milchtiers anzuschließen und das Tier automatisch zu melken, wobei die Melkmaschine von einem Computer gesteuert wird und der Computer ferner so vorgesehen ist, dass er nachprüft, ob ein Tier gemolken werden darf, wobei das Verfahren Folgendes umfasst:
- Verwenden eines Mahlzeitenkriterienparameters für jedes Tier, das von der Melkmaschine behandelt werden soll, und
- Messen der Zeit, seitdem das Milchtier zuletzt gemolken wurde, und **gekennzeichnet durch** folgende Schritte:
- Zulassen, dass das Milchtier gemolken wird, wenn die gemessene Zeit länger ist als ein Melkzulässigkeitsparameter, und
- Festlegen des Melkzulässigkeitsparameters auf der Grundlage des Mahlzeitenkriterienparameters.

2. Verfahren nach Anspruch 1, umfassend folgenden Schritt:
- Gestatten von mindestens einer vollen Mahlzeit für das Milchtier zwischen jedem Melken.

3. Verfahren nach Anspruch 1 oder 2, umfassend folgenden Schritt:
- Erhöhen der Anzahl der vollen Mahlzeiten zwischen jedem Melken, wenn sich das Milchtier später in der Laktationsphase befindet.

4. Verfahren nach einem der Ansprüche 1 bis 3, umfassend den weiteren folgenden Schritt:
- Verweigern des Zugangs des Tiers zum Futter, bis das Tier die automatische Melkmaschine durchläuft, wenn das Tier vorher eine festgelegte Anzahl voller Mahlzeiten beendet hat, ohne gemolken zu werden.

5. Verfahren nach einem der Ansprüche 1 bis 4, wobei
- der Computer so vorgesehen ist, dass er den Zugang zu den Futter- oder Wasserstellen steuert, indem er Tore steuert, die Zugang zu den Futter- oder Wasserstellen gewähren, oder die Abgabe von Futter oder Wasser in den Futter- oder Wasserstellen steuert.

6. Verfahren nach einem der Ansprüche 1 bis 5, wobei
- der Mahlzeitenkriterienparameter für jedes einzelne Tier in einem separaten Bereich bestimmt und dem Computer zur Verwendung in dem Verfahren zugeführt wird.

7. Verfahren nach einem der Ansprüche 1 bis 6, wobei der Mahlzeitenkriterienparameter mit folgenden Schritten bestimmt wird:
- Bereitstellen eines Tierkennungslesers in jeder Futter- und/oder Wasserstelle und Aufzeichnen jedes Erscheinens des Milchtiers in jeder Futter- und/oder Wasserstelle, um Fütterungsaufenthaltsintervalle zu ermitteln.

8. Verfahren nach Anspruch 7, wobei der Mahlzeitenkriterienparameter mit den weiteren folgenden Schritten bestimmt wird:
- Anpassen von mindestens zwei Dichtefunktionen an den natürlichen Logarithmus der Fütterungsaufenthaltsintervalle, und
- Festlegen, dass das Mahlzeitenkriterium größer als der Mittelwert für die Dichtefunktion mit dem niedrigsten Mittelwert ist und dass es geringer als der Mittelwert der Dichtefunktion mit dem höchsten Mittelwert ist.

9. Verfahren nach Anspruch 8, wobei
- der Mahlzeitenkriterienparameter so definiert wird, dass es dem Mittelwert für die Dichtefunktion mit dem höchsten Mittelwert entspricht, verringert mit der Standardabweichung für die Dichtefunktion mit dem höchsten Mittelwert, multipliziert mit einem festgelegten Faktor.

10. Verfahren nach Anspruch 8, wobei
- der Mahlzeitenkriterienparameter so definiert wird, dass es der Zeit entspricht, bei der sich die erste Dichtefunktion und die zweite Dichtefunktion schneiden.

11. Verfahren nach einem der Ansprüche 8 bis 10, wobei
- es sich bei jede Dichtefunktion um eine Gaußsche Dichtefunktion oder eine Weibull-Dichtefunktion handelt.

12. Verfahren nach Anspruch 1, wobei
- für Tiere in ihrer zweiten oder höheren Laktationsperiode der Mahlzeitenkriterienparameter auf den Wert festgelegt wird, der bei der vorherigen Laktation verwendet wurde.

13. Verfahren nach Anspruch 1, wobei
- ein neuer Mahlzeitenkriterienparameter für jedes Tier regelmäßig während einer Laktation bestimmt wird, und
- wenn sich der neue Mahlzeitenkriterienparameter von dem verwendeten Mahlzeitenkriterienparameter um mehr als einen festgelegten Schwellenwert unterscheidet, der neue Mahlzeitenkriterienparameter verwendet wird.

14. Verfahren nach Anspruch 1, wobei
- die Melkmaschine eine Futterstelle umfasst und das Verfahren den folgenden weiteren Schritt umfasst:
- Verweigern von Futter für das Milchtier an allen Futterstellen außer der Futterstelle in der Melkmaschine, wenn das Tier vorher eine festgelegte Anzahl voller Mahlzeiten beendet hat, ohne gemolken zu werden.

15. Automatische Melkmaschine zum automatischen Melken von Tieren, wobei die automatische Melkmaschine dafür vorgesehen ist, automatisch Zitzenbecher an den Zitzen eines Milchtiers anzuschließen und das Tier automatisch zu melken, wobei die Melkmaschine mit einem Computer für deren Steuerung ausgestattet ist und der Computer ferner so vorgesehen ist, dass er nachprüft, ob ein Tier gemolken werden darf, wobei die automatische Melkmaschine für Folgendes vorgesehen ist:
- Verwenden eines Mahlzeitenkriterienparameters für jedes Tier, das von der Melkmaschine behandelt werden soll, und
- Messen der Zeit, seitdem das Milchtier zuletzt gemolken wurde, **dadurch gekennzeichnet, dass** die automatische Melkmaschine für Folgendes vorgesehen ist:
- Zulassen, dass das Milchtier gemolken wird, wenn die gemessene Zeit länger ist als ein Melkzulässigkeitsparameter, und
- Festlegen des Melkzulässigkeitsparameters auf der Grundlage des Mahlzeitenkriterienparameters.

## Revendications

1. Procédé pour la traite automatique d'animaux au moyen d'une machine de traite destinée à raccorder automatiquement des gobelets trayeurs aux trayons d'un animal de traite et traire automatiquement ledit animal, dans lequel la machine de traite est commandée par un ordinateur, et ledit ordinateur est en outre destiné à vérifier si un animal est autorisé à être trait, ledit procédé comprenant :
- utiliser un paramètre de critère de repas pour chaque animal à traiter par ladite machine de traite, et
- mesurer le temps depuis la dernière fois que l'animal de traite a été trait, et étant **caractérisé par** les étapes consistant à :
- autoriser ledit animal de traite à être trait si ledit temps mesuré est supérieur à un paramètre d'autorisation de traite, et
- régler ledit paramètre d'autorisation de traite sur la base dudit paramètre de critère de repas.

2. Procédé selon la revendication 1, comprenant l'étape consistant à :
- accorder audit animal de traite au moins un repas complet entre chaque traite.

3. Procédé selon la revendication 1 ou 2, comprenant l'étape consistant à :
- augmenter le nombre de repas complets entre chaque traite quand ledit animal de traite se trouve plus tard dans la phase de lactation.

4. Procédé selon l'une quelconque des revendications 1 à 3, comprenant l'étape supplémentaire consistant à :
- refuser audit animal l'accès à l'alimentation jusqu'à ce que ledit animal passe par ladite machine de traite automatique, si ledit animal a auparavant fini un nombre prédéterminé de repas complets sans être trait.

5. Procédé selon l'une quelconque des revendications 1 à 4, dans lequel
- ledit ordinateur est destiné à commander l'accès auxdites stations d'alimentation ou d'eau en commandant des barrières donnant accès auxdites stations d'alimentation ou d'eau, ou en commandant la distribution d'alimentation ou d'eau dans lesdites stations d'alimentation ou d'eau.

6. Procédé selon l'une quelconque des revendications 1 à 5, dans lequel
- ledit paramètre de critère de repas est déterminé pour chaque animal individuel dans une zone séparée et transmis audit ordinateur pour l'utilisation dans ledit procédé.

7. Procédé selon l'une quelconque des revendications 1 à 6, dans lequel ledit paramètre de critère de repas est déterminé par les étapes consistant à :
- mettre à disposition un lecteur d'identification d'animal dans chaque station d'alimentation et/ou d'eau et enregistrer chaque passage dudit animal de traite dans chaque station d'alimentation et/ou d'eau afin d'établir des intervalles de visite d'alimentation.

8. Procédé selon la revendication 7, dans lequel ledit paramètre de critère de repas est déterminé par les étapes supplémentaires consistant à :
- adapter au moins deux fonctions de densité au logarithme naturel des intervalles de visite d'alimentation, et
- définir ledit critère de repas comme étant supérieur à la valeur moyenne pour la fonction de densité présentant la valeur moyenne la plus faible et comme étant inférieur à la valeur moyenne de la fonction de densité présentant la valeur moyenne la plus élevée.

9. Procédé selon la revendication 8, dans lequel
- ledit paramètre de critère de repas est défini comme étant la valeur moyenne pour la fonction de densité présentant la valeur moyenne la plus élevée, réduite de l'écart standard pour la fonction de densité présentant la valeur moyenne la plus élevée multiplié par un facteur défini.

10. Procédé selon la revendication 8, dans lequel
- ledit paramètre de critère de repas est défini comme étant le temps auquel la première fonction de densité et la seconde fonction de densité s'entrecoupent.

11. Procédé selon l'une quelconque des revendications 8 à 10, dans lequel
- chaque fonction de densité est une fonction de densité gaussienne ou une fonction de densité de Weibull.

12. Procédé selon la revendication 1, dans lequel
- pour des animaux présentant leur seconde période de lactation ou plus, ledit paramètre de critère de repas est réglé sur la valeur utilisée dans la lactation précédente.

13. Procédé selon la revendication 1, dans lequel
- un nouveau paramètre de critère de repas est déterminé pour chaque animal régulièrement pendant une lactation, et
- si ledit nouveau paramètre de critère de repas diffère dudit paramètre de critère de repas utilisé de plus d'un seuil déterminé, le nouveau paramètre de critère de repas est utilisé.

14. Procédé selon la revendication 1, dans lequel
- ladite machine de traite comprend une station d'alimentation, et le procédé comprend l'étape supplémentaire consistant à :
- refuser l'alimentation audit animal de traite dans toutes les stations d'alimentation sauf la station d'alimentation dans ladite machine de traite, si ledit animal a auparavant fini un nombre prédéterminé de repas complets sans être trait.

15. Machine de traite automatique pour la traite automatique d'animaux, la machine de traite automatique étant destinée à raccorder automatiquement des gobelets trayeurs aux trayons d'un animal de traite et traire automatiquement ledit animal, dans lequel la machine de traite est dotée d'un ordinateur pour la commande de celle-ci, et ledit ordinateur est en outre destiné à vérifier si un animal est autorisé à être trait, ladite machine de traite automatique étant destinée à :
- utiliser un paramètre de critère de repas pour chaque animal à traiter par ladite machine de traite, et
- mesurer le temps depuis la dernière fois que l'animal a été trait, **caractérisée en ce que** ladite machine de traite automatique est destinée à :
- autoriser ledit animal de traite à être trait si ledit temps mesuré est supérieur à un paramètre d'autorisation de traite, et
- régler ledit paramètre d'autorisation de traite sur la base dudit paramètre de critère de repas.
